# EUROPEAN PATENT APPLICATION

(11) **EP 4 773 199 A1**
(43) Date of publication of application: **08.07.2026**
(21) Application number: 25775727.8
(22) Date of filing: 17.01.2025
(51) Int. Cl.: H01M 4/13, H01M 4/139, H01M 4/04, H01M 10/0587, H01M 10/0525

(54) **NEGATIVE ELECTRODE SHEET, ELECTROCHEMICAL APPARATUS, AND ELECTRICAL DEVICE**

(30) Priority: 25.03.2024 CN 202410346736
(71) Applicant: Ningde Amperex Technology Limited, Ningde, Fujian 352100 (CN)
(72) Inventor: ZHAO, Long, Ningde, Fujian 352100 (CN); GONG, Zuzhen, Ningde, Fujian 352100 (CN)
(74) Representative: Kraus & Lederer PartGmbB
(86) International application number: PCT/CN2025/072975
(87) International publication number: WO 2025/200731

(57) **Abstract**

The present application relates to the field of battery technologies and discloses a negative electrode plate, an electrochemical apparatus, and an electric device. The negative electrode plate includes a first active material layer, a first current collector, and a second active material layer; the first active material layer includes a first coating and a second coating disposed between the first coating and the first current collector, along a first direction, a first end of the second coating exceeds a first end of the first coating, such that the first active material layer has a first single-layer portion, and/or along a second direction, a second end of the second coating exceeds a second end of the first coating, such that the first active material layer has a second single-layer portion, where the first direction and the second direction are opposite. The negative electrode plate, along the first direction or the second direction, has the second coating exceeding the first coating, thereby addressing the issue that two end portions of the active material layer are prone to overpressure during the rolling process, which leads to damage to the first current collector. This reduces the probability of tape breakage during the rolling process of the negative electrode plate and improves the production yield of the negative electrode plate.

## Description

### CROSS-REFERENCE TO RELATED APPLICATIONS

The present application claims priority to Chinese Patent Application No. 202410346736.8, filed on March 25, 2024, and entitled "NEGATIVE ELECTRODE PLATE, ELECTROCHEMICAL APPARATUS, AND ELECTRIC DEVICE," the entire content of which is incorporated herein by reference.

### TECHNICAL FIELD

The present application relates to the field of battery technologies, and particularly, to a negative electrode plate, an electrochemical apparatus, and an electric device.

### BACKGROUND

Lithium-ion batteries have advantages such as high energy density, long cycle life, and portability, and are widely used in various energy storage fields. A negative electrode plate in a lithium-ion battery typically includes a current collector and active material layers applied on two surfaces of the current collector. In the prior art, to improve production efficiency, a large electrode plate roll is typically produced continuously, and then the electrode plate roll is cut according to designed dimensions of a battery to obtain corresponding electrode plates. During the continuous production process of the electrode plate roll, when an active material is continuously applied, the active material layers on two surfaces of the current collector in the length direction of the current collector is aligned on at least one end. As a result, the aligned position of the active material layers at the end portion is highly susceptible to overpressure during subsequent cold pressing, causing damage to the current collector, leading to tape breakage of the negative electrode plate during subsequent processing, and resulting in low production yield and increased costs. Additionally, for the electrode plates cut from the electrode plate roll, the active material layers are typically aligned on at least one end of the electrode plate. After an electrode assembly is obtained through winding, during the subsequent hot pressing process, the empty foil region near the aligned position is prone to damage and fracture, generating burrs, which affects safety performance.

### SUMMARY

The main technical problem addressed by the present application is to provide a negative electrode plate, an electrochemical apparatus, and an electric device, which can effectively address the issues of the current collector being prone to damage and failure during continuous production, cold pressing, and rolling of the electrode plate roll, as well as the issue of the current collector being prone to damage during the hot pressing process when preparing the electrode plate into a cell.

The present application provides a negative electrode plate, where the negative electrode plate includes a first active material layer, a first current collector, and a second active material layer, and the first current collector is disposed between the first active material layer and the second active material layer. The first active material layer includes a first coating and a second coating, where the second coating is disposed between the first coating and the first current collector, along a length direction of the negative electrode plate, the first coating has a first end and a second end opposite to each other, the second coating has a first end and a second end opposite to each other, and the first end of the first coating and the first end of the second coating are at the same end of the first active material layer. Along a first direction, the first end of the second coating exceeds the first end of the first coating, such that the first active material layer has a first single-layer portion; and/or along a second direction, the second end of the second coating exceeds the second end of the first coating, such that the first active material layer has a second single-layer portion; where the first direction and the second direction are both the length direction of the negative electrode plate, and the first direction is opposite to the second direction. It should be noted that since the first end of the first coating and the first end of the second coating are at the same end of the first active material layer, the second end of the first coating and the second end of the second coating are necessarily at the other end of the first active material layer.

In the negative electrode plate of the present application, the two ends of the first coating and the second coating in the first active material layer are arranged to be misaligned, that is, along the first direction or the second direction, the second coating exceeds the first coating. This can prevent alignment of the end portions of the first coating and the second coating from increasing the thickness at the end portions of the first active material layer, thereby effectively addressing the issue that two end portions of the active material layer are prone to overpressure in the length direction during the rolling process of the negative electrode plate, which leads to damage to the first current collector. This reduces the probability of tape breakage during the rolling process of the negative electrode plate and improves the production yield of the negative electrode plate.

In some other embodiments of the present application, the second active material layer includes a third coating and a fourth coating, where the fourth coating is disposed between the third coating and the first current collector, along the length direction of the negative electrode plate, the third coating has a first end and a second end opposite to each other, the fourth coating has a first end and a second end opposite to each other, and the first end of the third coating, the first end of the fourth coating, the first end of the first coating, and the first end of the second coating are at the same end of the negative electrode plate. Along the first direction, the first end of the fourth coating exceeds the first end of the third coating, such that the second active material layer has a third single-layer portion; and/or along the second direction, the second end of the fourth coating exceeds the second end of the third coating, such that the second active material layer has a fourth single-layer portion. By configuring the second active material layer to be the same structure with a double-layer coating and end portion misalignment as the first active material layer, the thickness increase of the active material layers at the same end portion of the negative electrode plate can be further avoided, further reducing the probability of tape breakage during rolling of the negative electrode plate.

In another embodiment of the present application, along the length direction of the negative electrode plate, the negative electrode plate has an opposite first single-side coating portion, where the first single-side coating portion is a region on the negative electrode plate at which only the first active material layer or the second active material layer is disposed on a surface on one side of the first current collector, and a surface on the other side of the first current collector corresponds to a first blank current collector region. The single-side coating portion can further reduce the thickness between the same end portions of the first active material layer and the second active material layer, preventing tape breakage during cold pressing, and after the negative electrode plate is subsequently wound into an electrode assembly, preventing damage to the current collector due to the alignment of the end portions of the first active material layer and the second active material layer during hot pressing of the electrode assembly, which causes safety issues.

In another embodiment of the present application, along the length direction of the negative electrode plate, the negative electrode plate has an opposite second single-side coating portion, where the second single-side coating portion is a region on the negative electrode plate at which only the first active material layer or the second active material layer is disposed on a surface on one side of the first current collector, and a surface on the other side of the first current collector corresponds to a second blank current collector region. Providing single-side coating portions at both ends of the negative electrode plate can further mitigate the issues of tape breakage during cold pressing and current collector damage during hot pressing of the electrode assembly.

In another embodiment of the present application, the first blank current collector region and the second blank current collector region are located on surfaces on the same side of the first current collector. The structure that the first blank current collector and the second blank current collector are located on surfaces on the same side of the first current collector facilitates gap application of active material layers of the same size on each surface of the first current collector during the production of the electrode plate roll, enabling continuous production.

In another embodiment of the present application, along the length direction of the negative electrode plate, a length L1 of the first single-side coating portion satisfies: 3 mm ≤ L1 ≤ 100 mm.

In another embodiment of the present application, along the length direction of the negative electrode plate, a length L2 of the second single-side coating portion satisfies: 3 mm ≤ L2 ≤ 100 mm.

In another embodiment of the present application, the length L1 of the first single-side coating portion and the length L2 of the second single-side coating portion respectively satisfy: 3 mm ≤ L1 ≤ 5 mm, and 3 mm ≤ L2 ≤ 5 mm.

In another embodiment of the present application, the length L1 of the first single-side coating portion and the length L2 of the second single-side coating portion respectively satisfy: 60 mm ≤ L1 ≤ 100 mm, and 3 mm ≤ L2 ≤ 5 mm.

In another embodiment of the present application, along the length direction of the negative electrode plate, a length L3 of the first single-layer portion satisfies: 3 mm ≤ L3 ≤ 100 mm; and/or along the length direction of the negative electrode plate, a length L4 of the second single-layer portion satisfies: 3 mm ≤ L4 ≤ 100 mm.

In another embodiment of the present application, along the length direction of the negative electrode plate, the length L3 of the first single-layer portion satisfies: 3 mm ≤ L3 ≤ 10 mm; and/or along the length direction of the negative electrode plate, the length L4 of the second single-layer portion satisfies: 3 mm ≤ L4 ≤ 10 mm. The present application provides an electrochemical apparatus, where the electrochemical apparatus includes a positive electrode plate, a separator, and a negative electrode plate. The separator is disposed between the negative electrode plate and the positive electrode plate, and the positive electrode plate, the separator, and the negative electrode plate are stacked and wound to form a wound electrode assembly. A first single-side coating portion of the negative electrode plate is close to a winding center of the wound electrode assembly, and a second single-side coating portion of the negative electrode plate is farther away from the winding center of the wound electrode assembly. A length of the first single-side coating portion is greater than a length of the second single-side coating portion.

The present application provides another electrochemical apparatus, where the length L1 of the first single-side coating portion and the length L2 of the second single-side coating portion respectively satisfy: 60 mm ≤ L1 ≤ 100 mm, and 3 mm ≤ L2 ≤ 5 mm.

The present application provides an electric device including any one of the electrochemical apparatuses described above.

The present application provides an electric device, where the electric device includes the electrochemical apparatus described above, and the electrochemical apparatus is configured to provide electrical energy to the electric device.

### BRIEF DESCRIPTION OF DRAWINGS

To more clearly illustrate the technical solutions in the specific embodiments of the present application, the drawings used in the description of the specific embodiments are briefly introduced below. In all drawings, similar elements or parts are generally identified by similar reference numerals. The elements or parts in the drawings are not necessarily drawn to actual scale.
FIG. 1 is a schematic diagram of producing a large roll of a negative electrode plate in the prior art.
FIG. 2 is a cross-sectional view of a wound electrode assembly in an electrochemical apparatus according to an embodiment of the present application.
FIG. 3 is a cross-sectional view of a negative electrode plate in an unfolded state according to an embodiment of the present application.
FIG. 4 is a cross-sectional view of a negative electrode plate in an unfolded state according to another embodiment of the present application.
FIG. 5 is an enlarged view of a portion A of the electrochemical apparatus in FIG. 2 according to one embodiment of the present application.
FIG. 6 is an enlarged view of a portion A of the electrochemical apparatus in FIG. 2 according to another embodiment of the present application.

### DESCRIPTION OF EMBODIMENTS

To facilitate understanding of the present application, the present application is described in more detail below with reference to the drawings and specific embodiments. It should be noted that the terms "upper," "lower," "inner," "outer," "vertical," "horizontal," and similar indications of orientation or positional relationships used in this specification are based on the orientation or positional relationships shown in the drawings, and are only for the convenience of describing the present application and simplifying the description, rather than indicating or implying that the referred device or element must have a specific orientation, be constructed or operated in a specific orientation, and thus cannot be construed as limiting the present application. Additionally, the terms "first," "second," and similar terms are used for descriptive purposes only and cannot be understood as indicating or implying relative importance.

Unless otherwise defined, all technical and scientific terms used in this specification have the same meaning as commonly understood by those skilled in the technical field of the present application. The terms used in the specification of the present application are for the purpose of describing specific embodiments only and are not intended to limit the present application. The term "and/or" used in this specification includes any and all combinations of one or more related listed items.

Additionally, the technical features involved in different embodiments of the present application described below can be combined with each other as long as they do not conflict with each other.

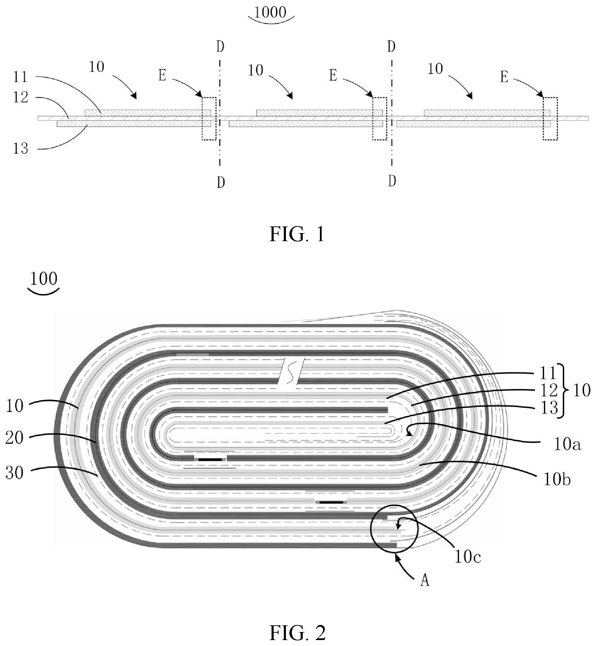

Referring to FIG. 1, in the prior art, to improve production efficiency, a large negative electrode plate roll 1000 is typically produced continuously, and then the electrode plate roll is cut according to designed dimensions of a battery to obtain a corresponding negative electrode plate 10. For example, cutting is performed at the position D-D to obtain a small-sized negative electrode plate 10. During the continuous production process of the negative electrode plate roll 1000, when active material layers 11 and 13 are continuously applied, at least the negative electrode active material layers 11 and 13 on two surfaces of a current collector 12 in the length direction of the negative current collector 12 are aligned at one end, as shown in portion E of FIG. 1. Since the current collector 12 of the negative electrode plate 10 is typically copper foil, which is relatively soft, the aligned position of the negative electrode active material layers at the end portion is highly susceptible to overpressure during subsequent cold pressing, causing damage to the negative current collector 12, leading to tape breakage of the negative electrode plate 10 during subsequent processing, and resulting in low production yield and increased costs. Additionally, for the negative electrode plate 10 cut from the negative electrode plate roll 1000, the negative electrode active material layers are typically aligned on at least one end of the electrode plate. After it is wound into an electrode assembly, during the subsequent hot pressing process, the empty foil region near the aligned position is prone to damage and fracture, generating burrs, which affects safety performance.

The present application adopts a structure in which double or multiple layers of active material are applied on the surface of the current collector, and two end portions of the double or multiple layers of active material are misaligned in the length direction of the negative electrode plate 10, which can effectively address the issue of tape breakage of the negative electrode plate during subsequent processing in the prior art.

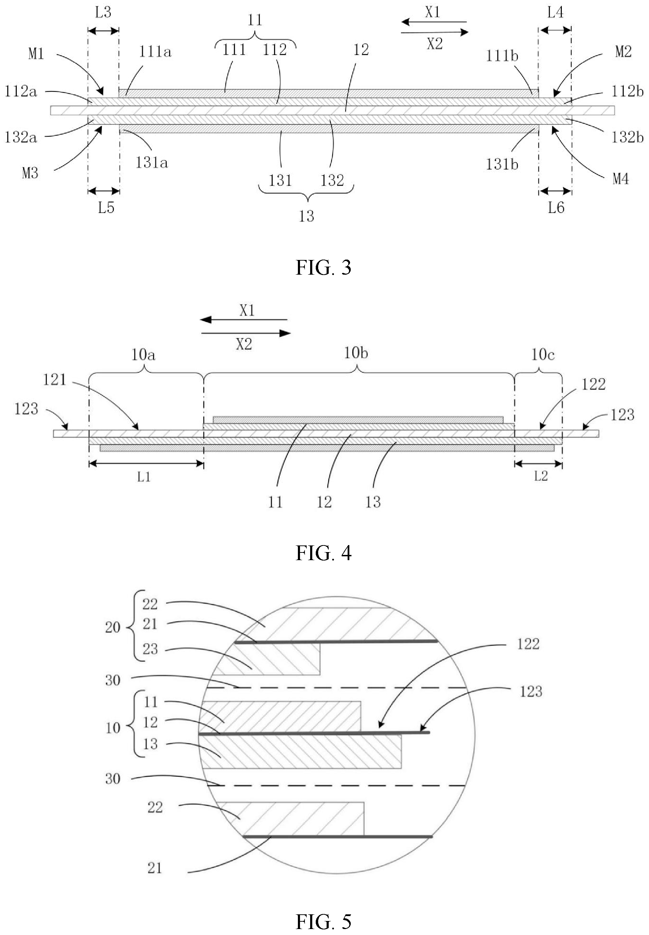

In some embodiments, referring to FIG. 2 and FIG. 3, the negative electrode plate 10 includes a first active material layer 11, a first current collector 12, and a second active material layer 13, and the first current collector 12 is disposed between the first active material layer 11 and the second active material layer 13. The first active material layer 11 and the second active material layer 13 may be directly applied on the surface of the first current collector 12 or indirectly applied on the surface of the first current collector 12 through other coatings. The first active material layer 11 has a double-layer coating structure, the first active material layer 11 includes a first coating 111 and a second coating 112, and the second coating 112 is disposed between the first coating 111 and the first current collector 12. Along the length direction of the negative electrode plate 10, the first coating 111 has a first end 111a and a second end 111b opposite to each other, and the second coating 112 has a first end 112a and a second end 112b opposite to each other. The first end 111a of the first coating 111 and the first end 112a of the second coating 112 are at the same end of the first active material layer 11, and the second end 111b of the first coating 111 and the second end 112b of the second coating 112 are at the other end of the first active material layer 11.

The first coating 111 and the second coating 112 are arranged with their end portions misaligned in the length direction of the negative electrode plate 10. Specifically, along the first direction X1, the first end 112a of the second coating 112 exceeds the first end 111a of the first coating 111, such that a first single-layer portion M1 is formed at an end portion of the first active material layer 11; and/or along the second direction X2, the second end 112b of the second coating 112 exceeds the second end 111b of the first coating 111, such that a second single-layer portion M2 is formed at the other end portion of the first active material layer 11. The first direction X1 and the second direction X2 are both the length direction of the negative electrode plate 10, with the first direction X1 being opposite to the second direction X2.

The applicant of the present application has found that during the coating process of the active material layer, the thickness of the starting section of the coating is typically slightly greater than that of the middle and ending sections, and particularly, the starting end portion of the starting section is even thicker. Therefore, in the negative electrode plate 10 of the present application, two ends of the first coating 111 and the second coating 112 in the first active material layer 11 are arranged to be misaligned, that is, along the first direction X1 or the second direction X2, the second coating 112 exceeds the first coating 111. This can prevent alignment of the end portions of the first coating 111 and the second coating 112 from increasing the thickness at the end portion of the first active material layer 11, thereby effectively addressing the issue that two end portions of the active material layer are prone to overpressure in the length direction during the rolling process of the negative electrode plate 10, which leads to damage to the first current collector 12. This reduces the probability of tape breakage during the rolling process of the negative electrode plate 10 and improves the production yield of the negative electrode plate 10.

In some embodiments, a temperature coefficient of the first coating 111 is greater than a temperature coefficient of the second coating 112. Both the first coating 111 and the second coating 112 include graphite, and the temperature coefficient of graphite is positively correlated with its kinetic performance. A higher temperature coefficient of graphite means better kinetic performance and higher molecular activity. Therefore, by disposing the first coating 111 with better kinetic performance on the outer side, the interface issues of the negative electrode plate 10 can be effectively addressed, improving the reaction efficiency of the first active material layer 11. The second coating 112 with a relatively lower temperature coefficient has a higher energy density. Disposing the second coating 112 on a side closer to the first current collector 12 can ensure that the first active material layer 11 can have a higher energy density. In other words, the structure of the first coating 111 and the second coating 112 with different kinetic performances in the present application can improve the kinetic performance of the first active material layer 11 while also enabling the first active material layer 11 to have a higher energy density.

The temperature coefficient of the first coating 111 is greater than the temperature coefficient of the second coating 112, the kinetic performance and energy density of the first coating 111 are different from the kinetic performance and energy density of the second coating 112, and the compacted densities and critical compacted densities of the first coating 111 and the second coating 112 are also different. Therefore, after coating, it is difficult to process the end portion of the first active material layer 11 by a thinning process. Therefore, in the embodiments of the present application, the first coating 111 and the second coating 112 are arranged in a misaligned structure at the end portion of the first active material layer 11, which can effectively avoid the problem of excessive thickness at the end portion of the first active material layer 11, reducing the probability of the first current collector 12 being easily crushed and failing during the cold pressing and rolling process.

In some embodiments, referring to FIG. 3, along the first direction X1, the length L3 of the first single-layer portion M1 satisfies: 3 mm ≤ L3 ≤ 100 mm; and/or along the second direction X2, the length L4 of the second single-layer portion M2 satisfies: 3 mm ≤ L4 ≤ 100 mm. By controlling the length of the first single-layer portion M1 and the length of the second single-layer portion M2 to be above 3 mm, a certain misalignment length can be provided between the first coating 111 and the second coating 112, thereby effectively addressing the problem of relatively large thickness at the end portion of the first active material layer 11. Certainly, to ensure the energy density of the negative electrode plate 10, the misalignment length between the first coating 111 and the second coating 112 does not need to be too long, that is, the length L3 of the first single-layer portion M1 satisfies: 3 mm ≤ L3 ≤ 10 mm; and/or along the second direction X2, the length L4 of the second single-layer portion M2 satisfies: 3 mm ≤ L4 ≤ 10 mm.

In further embodiments, when the ratio of the coating weight per unit area of the first coating 111 to the coating weight per unit area of the second coating 112 satisfies (1:1), the length L3 of the first single-layer portion M1 and the length L4 of the second single-layer portion M2 satisfy: L3 ≥ 3 mm, and L4 ≥ 3 mm. When the ratio of the coating weight per unit area of the first coating 111 to the coating weight per unit area of the second coating 112 satisfies (1:2), the length L3 of the first single-layer portion M1 and the length L4 of the second single-layer portion M2 satisfy: L3 ≥ 4 mm, and L4 ≥ 4 mm. When the ratio of the coating weight per unit area of the first coating 111 to the coating weight per unit area of the second coating 112 satisfies (1:4), the length L3 of the first single-layer portion M1 and the length L4 of the second single-layer portion M2 satisfy: L3 ≥ 5 mm, and L4 ≥ 5 mm. By adjusting the relationship between the coating weight per unit area and the misalignment length at the end portion between the first coating 111 and the second coating 112, the first active material layer 11 can have both good kinetic performance and high energy density, and the following problem can also be effectively addressed: an excessively large local thickness at the end portion of the first active material layer 11 leads to damage to the first current collector 12.

In some embodiments, the second active material layer 13 may be a single-layer coating structure or a double-layer or multi-layer coating structure. As an example, referring to FIG. 3, the second active material layer 13 is a double-layer coating structure. The second active material layer 13 includes a third coating 131 and a fourth coating 132, and the fourth coating 132 is disposed between the third coating 131 and the first current collector 12. Along the length direction of the negative electrode plate 10, the third coating 131 has a first end 131a and a second end 131b opposite to each other, and the fourth coating 132 has a first end 132a and a second end 132b opposite to each other. The first end 111a of the first coating 111, the first end 112a of the second coating 112, the first end 131a of the third coating 131, and the first end 132a of the fourth coating 132 are at the same end of the negative electrode plate 10.

The third coating 131 and the fourth coating 132 are arranged with their end portions misaligned in the length direction of the negative electrode plate 10. Specifically, along the first direction X1, the first end 132a of the fourth coating 132 exceeds the first end 131a of the third coating 131, such that a third single-layer portion M3 is formed at the end portion of the second active material layer 13; and/or along the second direction X2, the second end 132b of the fourth coating 132 exceeds the second end 131b of the third coating 131, such that a fourth single-layer portion M4 is formed at the other end portion of the second active material layer 13. The first direction X1 and the second direction X2 are both the length direction of the negative electrode plate 10, with the first direction X1 being opposite to the second direction X2.

In the negative electrode plate 10 of the present application, the ends of the third coating 131 and the fourth coating 132 in the second active material layer 13 are also arranged to be misaligned, that is, along the first direction X1 or the second direction X2, the fourth coating 132 exceeds the third coating 131. This can prevent alignment of the end portions of the third coating 131 and the fourth coating 132 from increasing the thickness at the end portion of the second active material layer 13, thereby effectively addressing the issue that two end portions of the active material layer are prone to overpressure in the length direction during the rolling process of the negative electrode plate 10, which leads to damage to the first current collector 12. This reduces the probability of tape breakage during the rolling process of the negative electrode plate 10 and improves the production yield of the negative electrode plate 10.

In some embodiments, referring to FIG. 3, along the first direction X1, the length L5 of the third single-layer portion M3 satisfies: 3 mm ≤ L5 ≤ 100 mm; and/or along the second direction X2, the length L6 of the fourth single-layer portion M4 satisfies: 3 mm ≤ L6 ≤ 100 mm. By controlling the length of the third single-layer portion M3 and the length of the fourth single-layer portion M4 to be above 3 mm, a certain misalignment length can be provided between the third coating 131 and the fourth coating 132, thereby effectively addressing the problem of relatively large thickness at the end portion of the second active material layer 13. Certainly, to ensure the energy density of the negative electrode plate 10, the misalignment length between the third coating 131 and the fourth coating 132 does not need to be too long, that is, the length L5 of the third single-layer portion M3 satisfies: 3 mm ≤ L5 ≤ 10 mm; and/or along the second direction X2, the length L6 of the fourth single-layer portion M4 satisfies: 3 mm ≤ L6 ≤ 10 mm.

In some embodiments, a temperature coefficient of the third coating 131 is greater than a temperature coefficient of the fourth coating 132. Both the third coating 131 and the fourth coating 132 include graphite, and the temperature coefficient of graphite is positively correlated with its kinetic performance. A higher temperature coefficient of graphite means better kinetic performance and higher molecular activity. Therefore, by disposing the third coating 131 with better kinetic performance on the outer side, the interface issues of the negative electrode plate 10 can be effectively addressed, improving the reaction efficiency of the second active material layer 13. The fourth coating 132 with a relatively lower temperature coefficient has a higher energy density. Disposing the fourth coating 132 on a side closer to the first current collector 12 can ensure that the second active material layer 13 can have a higher energy density. In other words, the structure of the third coating 131 and the fourth coating 132 with different kinetic performances in the present application can improve the kinetic performance of the second active material layer 13 while also enabling the second active material layer 13 to have a higher energy density.

In some embodiments, in the length direction of the negative electrode plate 10, in addition to the misalignment of the first coating 111 and the second coating 112 in the first active material layer 11, and/or the misalignment of the third coating 131 and the fourth coating 132 in the second active material layer 13, two end portions of the first active material layer 11 and the second active material layer 13 can also be misaligned.

As an example, referring to FIG. 4, along the length direction of the negative electrode plate 10, the negative electrode plate 10 includes a first single-side coating portion 10a, a middle portion 10b, and a second single-side coating portion 10c, and the first single-side coating portion 10a and the second single-side coating portion 10c are disposed opposite at two ends of the middle portion 10b.

The first single-side coating portion 10a is: a region, at one end portion in the length direction of the negative electrode plate 10, at which the first active material layer 11 or the second active material layer 13 is disposed only on the surface on one side of the first current collector 12, and the surface on the opposite other side of the first current collector 12 corresponds to a first blank current collector region 121. That is, at the first single-side coating portion 10a, the surface on the other side of the first current collector 12 is not provided with the first active material layer 11 or the second active material layer 13.

Similarly, the second single-side coating portion 10c is a region, at the other end portion in the length direction of the negative electrode plate 10, at which the first active material layer 11 or the second active material layer 13 is disposed only on the surface on one side of the first current collector 12, and the surface on the opposite other side of the first current collector 12 corresponds to a second blank current collector region 122. That is, at the second single-side coating portion 10c, the surface on the other side of the first current collector 12 is not provided with the first active material layer 11 or the second active material layer 13.

It is worth noting that, in the above-mentioned first single-side coating portion 10a and second single-side coating portion 10c, only the first active material layer 11 or the second active material layer 13 is disposed on one surface of the first current collector 12, where "only disposed" is meant for the first active material layer 11 and the second active material layer 13, that is, only one of them is applied. However, other coatings, such as conductive layers, safety layers, adhesive papers, and tapes can also be applied on the two surfaces of the first current collector 12.

In the embodiments of the present application, the first single-side coating portion 10a and the second single-side coating portion 10c are respectively provided at two end portions of the negative electrode plate 10, that is, along the first direction X1, the first active material layer 11 exceeds the second active material layer 13, or the second active material layer 13 exceeds the first active material layer 11, and along the second direction X2, the first active material layer 11 exceeds the second active material layer 13, or the second active material layer 13 exceeds the first active material layer 11. In other words, the first active material layer 11 and the second active material layer 13 at two end portions of the negative electrode plate 10 are arranged in a misaligned manner, which can avoid the alignment of the end portions of the first active material layer 11 and the second active material layer 13 leading to an increase in local thickness, thereby effectively addressing the issue that the two end portions are prone to overpressure during the rolling process of the negative electrode plate 10, which leads to damage to the first current collector 12. This reduces the probability of tape breakage of the negative electrode plate 10, and improves the production yield of the negative electrode plate 10.

The following description takes as an example that along the first direction X1, the second active material layer 13 exceeds the first active material layer 11, and along the second direction X2, the second active material layer 13 exceeds the first active material layer 11.

Referring to FIG. 4, in some embodiments, along the length direction of the negative electrode plate 10, the length L1 of the first single-side coating portion 10a satisfies: 3 mm ≤ L1 ≤ 100 mm. Along the length direction of the negative electrode plate 10, the length L2 of the second single-side coating portion 10c satisfies: 3 mm ≤ L2 ≤ 100 mm. By setting the misalignment length between the first active material layer 11 and the second active material layer 13 to 3 mm or more, the negative electrode plate 10 can avoid an increase in local thickness at the end portion caused by end portion alignment during the cold pressing process, thereby addressing the problem that the end portion of the first current collector 12 is subjected to damage caused by an excessive force, which causes local or overall crushing failure of the first current collector 12, and balancing the energy density and production cost of the secondary battery.

When the above-mentioned negative electrode plate 10 is applied in a laminated electrode assembly 100, the values of the length L1 of the first single-side coating portion 10a and the length L2 of the second single-side coating portion 10c can be smaller, for example, 3 mm ≤ L1 ≤ 5 mm, and 3 mm ≤ L2 ≤ 5 mm. Since the misalignment length of 3 mm between the first active material layer 11 and the second active material layer 13 can address the problem of the first current collector 12 being prone to damage during rolling, to reduce processing difficulty, the misalignment length between the first active material layer 11 and the second active material layer 13 can be appropriately increased. To ensure that the negative electrode plate 10 can have a high energy density, the misalignment length between the first active material layer 11 and the second active material layer 13 should not be set too long.

When the above-mentioned negative electrode plate 10 is applied in a wound electrode assembly 100, the length value of one of the first single-side coating portion 10a and the second single-side coating portion 10c that is located at the winding center can be larger, while the length value of the one farther away from the winding center can be smaller. As an example, referring to FIG. 2 and FIG. 4, the first single-side coating portion 10a of the negative electrode plate 10 is located at the winding center, with its length L1 satisfying 60 mm ≤ L1 ≤ 100 mm, and the second single-side coating portion 10c of the negative electrode plate 10 is farther away from the winding center, with its length L2 satisfying 3 mm ≤ L2 ≤ 5 mm. At the winding center of the electrode assembly 100, since there is no corresponding positive electrode plate 20 on the inner side of the negative electrode plate 10, the active material on the inner side of the negative electrode plate 10 cannot participate in electrochemical reactions. Therefore, to reduce the weight of the electrode assembly 100 and improve the energy density of the electrode assembly 100, the inner side of the end portion of the negative electrode plate 10 located at the winding center is typically set as an empty foil region 123, that is, no active material is applied. At the winding center of the electrode assembly 100, there is a corresponding positive electrode plate 20 on the outer side of the negative electrode plate 10. Therefore, providing an active material layer on the outer side of the negative electrode plate 10 allows participation in electrochemical reactions with the active material layer of the positive electrode plate 20. That is, the first single-side coating portion 10a offers a misaligned arrangement of the active material layers on two side surfaces of the first current collector 12. Additionally, since the length of the empty foil region 123 at the winding center of the negative electrode plate 10 is positively correlated with the width of the finished electrochemical apparatus, that is, a longer empty foil region 123 means a wider corresponding electrochemical apparatus. Therefore, in some embodiments, the value of the length L1 of the first single-side coating portion 10a of the negative electrode plate 10 can be larger.

Referring to FIG. 2, FIG. 5, and FIG. 6, at the end portion of the negative electrode plate 10 farther away from the winding center of the electrode assembly 100, both the inner surface and the outer surface have corresponding positive electrode plates 20. Therefore, the first active material layer 11 and the second active material layer 13 should be respectively provided on two sides at the end portion of the negative electrode plate 10. However, to avoid an increase in local thickness caused by the alignment of the first active material layer 11 and the second active material layer 13 at the end portion of the negative electrode plate 10, the first active material layer 11 and the second active material layer 13 can be arranged to be misaligned, that is, the length L2 of the second single-side coating portion 10c is 3 mm or more. Considering processing difficulty and ensuring energy density, the length L2 of the second single-side coating portion 10c can be appropriately increased, for example, 3 mm ≤ L2 ≤ 5 mm.

In some embodiments, referring to FIG. 4, the first blank current collector region 121 and the second blank current collector region 122 of the negative electrode plate 10 can be located on surfaces on the same side of the first current collector 12. They can also be located on surfaces on different sides of the first current collector 12, that is, the first blank current collector region 121 is located on one surface of the first current collector 12, while the second blank current collector region 122 is located on the other surface of the first current collector 12, with the two surfaces of the first current collector 12 being oppositely disposed.

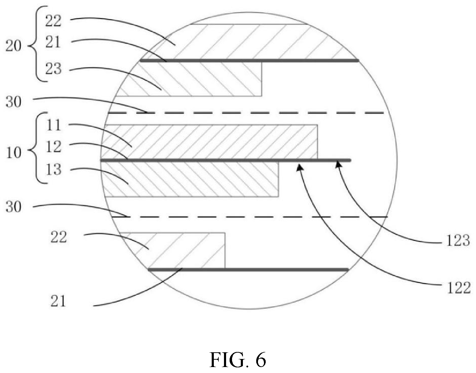

The following description takes as an example the application of the negative electrode plate 10 in a wound electrode assembly 100. Referring to FIG. 2, the first single-side coating portion 10a of the negative electrode plate 10 is located at the winding center of the electrode assembly 100, and the first blank current collector region 121 is located on the inner surface of the first current collector 12. The second single-side coating portion 10c of the negative electrode plate 10 is farther away from the winding center of the electrode assembly 100. In this case, as shown in FIG. 5, the second blank current collector region 122 can be located on the inner surface of the first current collector 12, or as shown in FIG. 6, the second blank current collector region 122 can be located on the outer surface of the first current collector 12. It is worth noting that, due to the presence of the second blank current collector region 122, the region of the positive electrode plate 20 in the electrode assembly 100 corresponding to the second blank current collector region 122 can appropriately have a reduced coating length of the active material layer, ensuring that the negative electrode active material layer on the negative electrode plate 10 can completely cover the positive electrode active material layer on the positive electrode plate 20, effectively avoiding the phenomenon of lithium precipitation caused by free lithium ions at the position of the second blank current collector region 122 that cannot be intercalated into the active material layer of the negative electrode plate 10.

In the above-mentioned embodiments, along the length direction of the negative electrode plate 10, two ends of the negative electrode plate 10 are respectively the first single-side coating portion 10a and the second single-side coating portion 10c, while in some other embodiments, referring to FIG. 4, two ends of the negative electrode plate 10 can also be empty foil regions 123, that is, neither the first active material layer 11 nor the second active material layer 13 is applied on two surfaces of the first current collector 12.

The embodiments of the present application further provide an electrochemical apparatus, where the electrochemical apparatus includes a housing, an electrode assembly 100, a positive electrode tab, and a negative electrode tab. The housing is provided with a receiving cavity for accommodating the electrode assembly 100, and the positive electrode tab and the negative electrode tab are both electrically connected to the electrode assembly 100 and extend out of the housing. The receiving cavity is filled with an electrolyte for the electrode assembly 100 to undergo electrochemical reactions. The electrode assembly 100 includes a positive electrode plate 20, a separator 30, and a negative electrode plate 10. The separator 30 is configured to separate the positive electrode plate 20 and the negative electrode plate 10. For the structure and function of the negative electrode plate 10, reference can be made to the above embodiments, which will not be repeated herein.

In some embodiments, to ensure that lithium ions can smoothly intercalate into the active material layer of the negative electrode plate 10 and prevent lithium precipitation, the coating length of the active material layer on the negative electrode plate 10 typically needs to be greater than the coating length of the active material layer on the positive electrode plate 20. As an example, referring to FIG. 2 and FIG. 5, the positive electrode plate 20 includes a second current collector 21, a third active material layer 22, and a fourth active material layer 23. The third active material layer 22 is disposed on the inner surface of the second current collector 21 close to the winding center of the electrode assembly 100, and the fourth active material layer 23 is disposed on the outer surface of the second current collector 21 farther away from the winding center of the electrode assembly 100. When the second blank current collector region 122 of the negative electrode plate 10 is located on the inner surface, the length of the fourth active material layer 23 can be appropriately reduced, thereby ensuring that the first active material layer 11 can exceed the fourth active material layer 23. Referring to FIG. 2 and FIG. 6, when the second blank current collector region 122 of the negative electrode plate 10 is located on the outer surface, the length of the third active material layer 22 can be appropriately reduced, thereby ensuring that the second active material layer 13 can exceed the third active material layer 22.

The embodiments of the present application further provide an electric device, where the electric device includes the electrochemical apparatus in any of the above embodiments, and the electrochemical apparatus provides electrical energy to the electric device. For the structure and function of the electrochemical apparatus, reference can be made to the above embodiments, which will not be repeated herein.

The negative electrode plate 10 in the embodiments of the present application includes a first active material layer 11, a first current collector 12, and a second active material layer 13, and the first current collector 12 is disposed between the first active material layer 11 and the second active material layer 13. Along the first direction X1, the first end 112a of the second coating 112 exceeds the first end 111a of the first coating 111, such that a first single-layer portion is formed at an end portion of the first active material layer 11; and/or along the second direction X2, the second end 112b of the second coating 112 exceeds the second end 111b of the first coating 111, such that a second single-layer portion is formed at the other end portion of the first active material layer 11. In the negative electrode plate 10 of the present application, the ends of the first coating 111 and the second coating 112 in the first active material layer 11 are arranged to be misaligned, that is, along the first direction X1 or the second direction X2, the second coating 112 exceeds the first coating 111. This can prevent alignment of the end portions of the first coating 111 and the second coating 112 from increasing the thickness at the end portion of the first active material layer 11, thereby effectively addressing the issue that two end portions of the active material layer are prone to overpressure in the length direction during the rolling process of the negative electrode plate 10, which leads to damage to the first current collector 12. This reduces the probability of tape breakage during the rolling process of the negative electrode plate 10 and improves the production yield of the negative electrode plate 10.

To facilitate understanding of the technical concepts and technical effects of the present application, experiments are described below by taking lithium-ion batteries as an example.

### Experiment 1: [Preparation of large roll of negative electrode plate]

### Example 1

Artificial graphite (gram capacity=360 mAh/g), carboxymethyl cellulose (CMC, with a weight average molecular weight of 7.0×10⁵), a binder styrene-butadiene rubber (SBR, with a weight average molecular weight of 5×10⁶) were mixed according to a mass ratio of 97.8:1.2:1, and then deionized water was added as a solvent. The foregoing substances were stirred under the action of a vacuum mixer to obtain a first coating slurry with a solid content of 50 wt% and a uniform system.

Artificial graphite (gram capacity=360 Ah/g), carboxymethyl cellulose (CMC, with a weight average molecular weight of 7.0×10⁵), a binder styrene-butadiene rubber (SBR, with a weight average molecular weight of 5×10⁶) were mixed according to a mass ratio of 97.5:1.2:1.3, and then deionized water was added as a solvent. The foregoing substances were stirred under the action of a vacuum mixer to obtain a second coating slurry with a solid content of 50 wt% and a uniform system.

The first coating slurry and the second coating slurry were simultaneously and uniformly applied on one surface of a negative current collector copper foil (tensile strength=500 MPa) with a thickness of 8 µm through a double-cavity extrusion coating die head, and dried at 90°C to obtain a large roll of negative electrode plate with the first coating and the second coating applied on one side. The second coating was located between the first coating and the negative current collector copper foil. Thereafter, the above steps were repeated on the other surface of the negative current collector copper foil, and then cold pressing was performed to form a semi-finished large roll of negative electrode plate with negative electrode active material layers (the first coating and the second coating) applied on two surfaces. After baking the semi-finished negative electrode plate at 290°C for 10 h, the temperature was lowered to room temperature in an environment with humidity <5%, and the thicknesses of the first coating and the second coating before cold pressing were both 50 µm.

As shown in FIG. 3, the negative electrode plate 10 included a first active material layer 11, a first current collector 12, and a second active material layer 13, and the first current collector 12 was disposed between the first active material layer 11 and the second active material layer 13. The first active material layer 11 included a first coating 111 and a second coating 112, and the second coating 112 was disposed between the first coating 111 and the first current collector 12. The first end 112a of the second coating 112 exceeded the first end 111a of the first coating 111 to form a first single-layer portion M1, and the second end 112b of the second coating 112 exceeded the second end 111b of the first coating 111 to form a second single-layer portion M2. The length L3 of the first single-layer portion M1 was 3 mm, and the length L4 of the second single-layer portion M2 was 3 mm.

Examples 2 to 6: Except for the different lengths L3 of the first single-layer portions M1 and lengths L4 of the second single-layer portions M2, the remaining parameters were the same as those in Example 1. For details, refer to Table 1 below.

Example 7: On the basis of the negative electrode plate structure in Example 1, as shown in FIG. 3, the second active material layer 13 included a third coating 131 and a fourth coating 132, and the fourth coating 132 was disposed between the third coating 131 and the first current collector 12. The first end 132a of the fourth coating 132 exceeded the first end 131a of the third coating 131 to form a third single-layer portion M3; the second end 132b of the fourth coating 132 exceeded the second end 131b of the third coating 131 to form a fourth single-layer portion M4. The length L5 of the third single-layer portion M3 was 3 mm, and the length L6 of the fourth single-layer portion M4 was 3 mm.

Examples 8 to 10: Except for the different lengths L5 of the third single-layer portions M3 and lengths L6 of the fourth single-layer portions M4, the remaining parameters were the same as those in Example 7. For details, refer to Table 1 below.

Example 11: On the basis of the negative electrode plate structure in Example 1, as shown in FIG. 4, along the length direction of the negative electrode plate, the first active material layer and the second active material layer were misaligned to form a first single-side coating portion at one end portion of the negative electrode plate, where the length L1 of the first single-side coating portion was 3 mm.

Examples 12 to 14: Except for the different lengths L1 of the first single-side coating portions, the remaining parameters were the same as those in Example 11. For details, refer to Table 1 below.

Example 15: On the basis of the negative electrode plate structure in Example 13, as shown in FIG. 4, along the length direction of the negative electrode plate, two end portions of the first active material layer and the second active material layer were misaligned to form a first single-side coating portion and a second single-side coating portion respectively at two ends of the negative electrode plate, where the length L1 of the first single-side coating portion was 60 mm, and the length L2 of the second single-side coating portion was 3 mm.

Examples 16 to 18: Except for the different lengths L2 of the second single-side coating portions, the remaining parameters were the same as those in Example 15. For details, refer to Table 1 below.

Examples 19 and 20: Except for the different lengths L5 of the third single-layer portions M3 and lengths L6 of the fourth single-layer portions M4, the remaining parameters were the same as those in Example 16. For details, refer to Table 1 below.

Comparative Example 1: Along the length direction of the negative electrode plate, two end portions of the first coating and the second coating in the first active material layer were both aligned, that is, there was no first single-layer portion and/or second single-layer portion in the first active material layer, and the remaining parameters were the same as those in Example 1. For details, refer to Table 1 below.

Tape breakage rate test method: A coated negative electrode plate of about 1000 meters after coiling was taken, and rolled cold pressing was performed in a cold pressing machine. With the electrode plate compacted density set to 1.7 g/cm³, the total length before cold pressing set to Y, and the length lost due to tape breakage during cold pressing set to Y', the cold pressing tape breakage rate = Y'/Y × 100%.

**Table 1**

| | Length L1 of first single-side coating portion (mm) | Length L2 of second single-side coating portion (mm) | Length L3 of first single-layer portion (mm) | Length L4 of second single-layer portion (mm) | Length L5 of third single-layer portion (mm) | Length L6 of fourth single-layer portion (mm) | Tape breakage rate/% |
|---|---|---|---|---|---|---|---|
| Comparative Example 1 | 0 | 0 | 0 | 0 | 0 | 0 | 33.6% |
| Example 1 | 0 | 0 | 3 | 3 | 0 | 0 | 5.6% |
| Example 2 | 0 | 0 | 10 | 0 | 0 | 0 | 8.7% |
| Example 3 | 0 | 0 | 0 | 10 | 0 | 0 | 8.6% |
| Example 4 | 0 | 0 | 5 | 5 | 0 | 0 | 4.6% |
| Example 5 | 0 | 0 | 10 | 10 | 0 | 0 | 4.3% |
| Example 6 | 0 | 0 | 100 | 100 | 0 | 0 | 4.2% |
| Example 7 | 0 | 0 | 3 | 3 | 3 | 3 | 3.3% |
| Example 8 | 0 | 0 | 3 | 3 | 5 | 5 | 2.5% |
| Example 9 | 0 | 0 | 3 | 3 | 10 | 10 | 2.4% |
| Example 10 | 0 | 0 | 3 | 3 | 100 | 100 | 2.3% |
| Example 11 | 3 | 0 | 3 | 3 | 0 | 0 | 1.8% |
| Example 12 | 5 | 0 | 3 | 3 | 0 | 0 | 1.7% |
| Example 13 | 60 | 0 | 3 | 3 | 0 | 0 | 1.5% |
| Example 14 | 100 | 0 | 3 | 3 | 0 | 0 | 1.5% |
| Example 15 | 60 | 3 | 3 | 3 | 0 | 0 | 0.6% |
| Example 16 | 60 | 5 | 3 | 3 | 0 | 0 | 0.4% |
| Example 17 | 60 | 60 | 3 | 3 | 0 | 0 | 0.3% |
| Example 18 | 60 | 100 | 3 | 3 | 0 | 0 | 0.3% |
| Example 19 | 60 | 5 | 3 | 3 | 3 | 3 | 0.1% |
| Example 20 | 60 | 5 | 3 | 3 | 5 | 5 | 0.1% |

Conclusion: From Comparative Example 1 and Examples 1-10, it can be seen that the structure that one end portion or two end portions of the double-layer coating: the first coating and the second coating applied to a single side of the negative electrode plate are misaligned can effectively reduce the tape breakage rate during the production of large rolls of negative electrode plates, improving the continuity and product quality of large roll production. According to Examples 11-20, the structure that one end portion or two end portions of the first active material layer and the second active material layer on two sides of the first current collector on the negative electrode plate are misaligned can further reduce the tape breakage rate during the production of large rolls of negative electrode plates, improving the continuity and product quality of large roll production.

### Experiment 2: [Hot pressing pass rate test of lithium-ion batteries]

### <Preparation of negative electrode plate>

The large rolls of negative electrode plates in Comparative Example 1, Example 1, and Example 15 were cut respectively to obtain three types of negative electrode plates suitable for making lithium-ion batteries with single-side coating thickness of 90 µm and width × length of 76 mm × 860 mm. A negative electrode tab slot of 12 mm × 35 mm was opened on the negative electrode plate by laser, and a negative electrode tab with thickness of 110 µm and width × length of 8 mm × 55 mm was welded in the negative electrode tab slot.

### <Preparation of positive electrode plate>

A positive electrode active material lithium iron phosphate, positive conductive agent acetylene black, positive binder polyvinylidene fluoride (PVDF, weight average molecular weight 5×10⁵) were mixed according to a mass ratio of 94:3:3, and N-methylpyrrolidone (NMP) was added as a solvent. The substances were stirred under the action of a vacuum mixer to obtain a positive electrode slurry with a solid content of 75 wt% and a uniform system. The positive electrode slurry was uniformly applied on one surface of a positive current collector aluminum foil with a thickness of 6 µm, and dried at 90°C to obtain a positive electrode plate with a positive electrode active material layer (with a thickness of 80 µm) applied on one surface. Thereafter, the above steps were repeated on the other surface of the aluminum foil to obtain a positive electrode plate with positive electrode active material layers applied on two surfaces. After cold pressing and slitting, a positive electrode tab slot of 10 mm × 35 mm was opened on the positive electrode plate by laser, and a positive electrode tab with thickness of 116 µm and width × length of 5 mm × 55 mm was welded in the positive electrode tab slot to obtain a positive electrode plate with specifications of 74 mm × 851 mm for use.

### <Separator> A polyethylene (PE) porous film with a thickness of 8 µm was used as the separator.

### <Preparation of electrolyte>

In a dry argon atmosphere, ethylene carbonate, ethyl methyl carbonate, and diethyl carbonate were mixed according to a mass ratio of 30:50:20 to obtain an organic solution, and then a lithium salt lithium hexafluorophosphate was added to the organic solvent to dissolve and mix uniformly, to obtain an electrolyte with a lithium salt concentration of 1.15 mol/L.

### <Preparation of lithium-ion battery>

The separator, positive electrode plate, separator, and negative electrode plate prepared above were stacked in order and wound to obtain an electrode assembly. A first single-side coating portion of the negative electrode plate was close to a winding center of the wound electrode assembly, and a second single-side coating portion of the negative electrode plate was farther away from the winding center of the wound electrode assembly. Hot pressing was performed on the electrode assembly at a pressure of 5 MPa, temperature of 65°C, and holding time of 10s. The electrode assembly was placed into an outer packaging aluminum-plastic film, moisture was removed at 80°C, electrolyte was injected, sealing was performed, and after processes such as formation, degassing, and shaping, a lithium-ion battery was obtained. Different negative electrode plates obtained from Comparative Example 1, Example 1, and Example 13 were used to prepare three different types of lithium-ion batteries.

Through the above steps, 10 batteries were made for each type of the three types of different lithium-ion batteries, and the 30 lithium-ion batteries were subjected to hot pressing test experiments (hot pressing conditions: hot pressing pressure 0.25 MPa, temperature 65°C, and time 4s). After the experiments were completed, the lithium-ion batteries were disassembled to record the number of damaged negative current collectors, as shown in Table 2 below.

**Table 2**

| | Batteries made with negative electrode plate in Comparative Example 1 | Batteries made with negative electrode plate in Example 1 | Batteries made with negative electrode plate in Example 13 |
|---|---|---|---|
| Pass rate | 3/10 | 9/10 | 10/10 |

Conclusion: According to the above experimental results, it can be seen that the negative electrode plate in the electrode assembly adopting the structure that the first coating and the second coating with a double-layer coating applied on one side are misaligned at one end portion or two end portions can effectively improve the pass rate of lithium-ion batteries in hot pressing experiments. The negative electrode plate in the electrode assembly adopting the structure that the first active material layer and the second active material layer on two sides of the first current collector are misaligned on one end portion or two end portions can further improve the pass rate of lithium-ion batteries in hot pressing experiments, thereby improving the safety performance of lithium-ion batteries.

The above are only embodiments of the present application and are not intended to limit the patent scope of the present application. Any equivalent structures or equivalent process transformations made using the contents of the specification and drawings of the present application, or directly or indirectly applied in other related technical fields, are similarly included in the patent protection scope of the present application.

## Claims

1. A negative electrode plate , comprising:
a first active material layer , a first current collector , and a second active material layer , wherein the first current collector is disposed between the first active material layer and the second active material layer ; wherein
the first active material layer comprises a first coating and a second coating , wherein the second coating is disposed between the first coating and the first current collector, along a length direction of the negative electrode plate , the first coating has a first end and a second end opposite to each other, the second coating has a first end and a second end opposite to each other, and the first end of the first coating and the first end of the second coating are at the same end of the first active material layer ; and
along a first direction , the first end of the second coating exceeds the first end of the first coating , such that the first active material layer has a first single-layer portion ; and/or along a second direction , the second end of the second coating exceeds the second end of the first coating , such that the first active material layer has a second single-layer portion ; wherein the first direction and the second direction are both the length direction of the negative electrode plate , and the first direction is opposite to the second direction .

2. The negative electrode plate according to claim 1, wherein
the second active material layer comprises a third coating and a fourth coating , wherein the fourth coating is disposed between the third coating and the first current collector , along the length direction of the negative electrode plate , the third coating has a first end and a second end opposite to each other, the fourth coating has a first end and a second end opposite to each other, and the first end of the third coating , the first end of the fourth coating , the first end of the first coating , and the first end of the second coating are at the same end of the negative electrode plate ; and
along the first direction , the first end of the fourth coating exceeds the first end of the third coating , such that the second active material layer has a third single-layer portion ; and/or along the second direction , the second end of the fourth coating exceeds the second end of the third coating , such that the second active material layer has a fourth single-layer portion.

3. The negative electrode plate according to claim 2, wherein
along the length direction of the negative electrode plate , the negative electrode plate has an opposite first single-side coating portion , wherein the first single-side coating portion is a region on the negative electrode plate at which only the first active material layer or the second active material layer is disposed on a surface on one side of the first current collector , and a surface on the other side of the first current collector corresponds to a first blank current collector region .

4. The negative electrode plate according to claim 3, wherein
along the length direction of the negative electrode plate , the negative electrode plate has an opposite second single-side coating portion , wherein the second single-side coating portion is a region on the negative electrode plate at which only the first active material layer or the second active material layer is disposed on a surface on one side of the first current collector , and a surface on the other side of the first current collector corresponds to a second blank current collector region .

5. The negative electrode plate according to claim 4, wherein
the first blank current collector region and the second blank current collector region are located on surfaces on the same side of the first current collector.

6. The negative electrode plate according to any one of claims 3-5, wherein
along the length direction of the negative electrode plate , a length L1 of the first single-side coating portion satisfies: 3 mm ≤ L1 ≤ 100 mm.

7. The negative electrode plate according to claim 6, wherein
along the length direction of the negative electrode plate , a length L2 of the second single-side coating portion satisfies: 3 mm ≤ L2 ≤ 100 mm.

8. The negative electrode plate according to claim 7, wherein
the length L1 of the first single-side coating portion and the length L2 of the second single-side coating portion respectively satisfy: 3 mm ≤ L1 ≤ 5 mm, and 3 mm ≤ L2 ≤ 5 mm.

9. The negative electrode plate according to claim 7, wherein
the length L1 of the first single-side coating portion and the length L2 of the second single-side coating portion respectively satisfy: 60 mm ≤ L1 ≤ 100 mm, and 3 mm ≤ L2 ≤ 5 mm.

10. The negative electrode plate according to claim 2, wherein
along the length direction of the negative electrode plate , a length L3 of the first single-layer portion satisfies: 3 mm ≤ L3 ≤ 100 mm;
and/or,
along the length direction of the negative electrode plate , a length L4 of the second single-layer portion satisfies: 3 mm ≤ L4 ≤ 100 mm.

11. The negative electrode plate according to claim 10, wherein
along the length direction of the negative electrode plate , the length L3 of the first single-layer portion satisfies: 3 mm ≤ L3 ≤ 10 mm;
and/or,
along the length direction of the negative electrode plate , the length L4 of the second single-layer portion satisfies: 3 mm ≤ L4 ≤ 10 mm.

12. An electrochemical apparatus , comprising a positive electrode plate , a separator , and the negative electrode plate according to any one of claims 1 to 11, wherein the separator is disposed between the negative electrode plate and the positive electrode plate .

13. An electrochemical apparatus , comprising a positive electrode plate , a separator , and the negative electrode plate according to claim 9, wherein the separator is disposed between the negative electrode plate and the positive electrode plate , the positive electrode plate , the separator , and the negative electrode plate are stacked and wound to form a wound electrode assembly, a first single-side coating portion of the negative electrode plate is close to a winding center of the wound electrode assembly , and a second single-side coating portion of the negative electrode plate is farther away from the winding center of the wound electrode assembly , wherein L1 > L2.

14. The electrochemical apparatus according to claim 13, wherein
a length L1 of the first single-side coating portion and a length L2 of the second single-side coating portion respectively satisfy: 60 mm ≤ L1 ≤ 100 mm, and 3 mm ≤ L2 ≤ 5 mm.

15. An electric device, comprising the electrochemical apparatus according to any one of claims 12 to 14.
